Europäisches Patentamt

European Patent Office

Office européen des brevets

(11) Numéro de publication: **0 263 754 B1**

(12) **FASCICULE DE BREVET EUROPEEN**

(45) Date de publication de fascicule du brevet:
**22.01.92**

(51) Int. Cl.⁵: **H02B 1/28**

(21) Numéro de dépôt: **87402201.5**

(22) Date de dépôt: **05.10.87**

(54) **Coffret étanche à visière, notamment pour appareillages électriques.**

(30) Priorité: **06.10.86 FR 8613876**

(43) Date de publication de la demande:
**13.04.88 Bulletin 88/15**

(45) Mention de la délivrance du brevet:
**22.01.92 Bulletin 92/04**

(84) Etats contractants désignés:
**BE DE ES GB IT**

(56) Documents cités:
**US-A- 2 274 106**
**US-A- 3 912 348**

(73) Titulaire: **LEGRAND**
**128 Avenue du Maréchal de Lattre de Tassigny**
**F-87045 Limoges Cédex(FR)**

(72) Inventeur: **Parlatore, Roger**
**10 Rue Corneille**
**F-87110 Condat(FR)**
Inventeur: **Tarrade, Gérard**
**Avenue Baudin Résidence Parc Baudin**
**F-87000 Limoges(FR)**
Inventeur: **Dunouhaud, Gérard**
**Le Métayer**
**F-87260 Saint Paul(FR)**

(74) Mandataire: **CABINET BONNET-THIRION**
**95 Boulevard Beaumarchais**
**F-75003 Paris(FR)**

Rank Xerox (UK) Business Services

## Description

La présente invention concerne d'une manière générale les coffrets du type de ceux couramment mis en oeuvre pour le logement, par exemple, d'appareillages électriques.

Sous sa forme la plus générale, un tel coffret comporte, globalement, une boîte, qui, globalement parallélépipédique, en forme le corps, et qui, ouverte à l'avant, est fermée à l'arrière par un fond, et une porte, qui, pour la fermeture, à l'avant, de ladite boîte, est articulée à celle-ci le long d'une de ses parois latérales.

La présente invention vise plus particulièrement le cas où, d'une part, un tel coffret est réalisé en matière synthétique, par moulage de celle-ci, et/ou, d'autre part, s'agissant d'un coffret communément dit étanche, il est prévu un cadre, qui, solidaire de la boîte, s'étend autour de l'ouverture de celle-ci, et qui est destiné à coopérer en étanchéité avec la porte, celle-ci étant munie à cet effet, en pratique dans une gorge, d'un joint d'étanchéité ayant un même contour que ce cadre.

La présence de ce cadre, qui est nécessairement en retrait par rapport au contour propre de la boîte, n'est pas sans compliquer la réalisation de celle-ci.

En effet, les contre-dépouilles auxquelles il correspond nécessitent, pour sa réalisation, la présence, sur le moule correspondant, de mécanismes à tiroir, ce qui conduit inévitablement à des moules coûteux, relativement fragiles, et de cadences de moulage lentes, au détriment du prix de revient de l'ensemble.

De ce fait, il n'est usuellement procédé au moulage d'un seul tenant de la boîte avec son fond et son cadre que pour des boîtes de dimensions relativement modestes.

Pour des dimensions plus importantes, il est usuellement procédé à une réalisation en deux pièces de cette boîte, à savoir, d'une part, une pièce formée de ses parois latérales, avec, d'un seul tenant avec celles-ci, soit le cadre soit le fond associé, et, d'autre part, la pièce, fond ou cadre, exclue de la réalisation précédente.

Il faut ensuite ajuster l'une à l'autre de manière étanche ces deux pièces, et, que la pièce rapportée soit le cadre ou qu'il s'agisse du fond, cela implique d'intervenir sur quatre côtés, le long du périmètre d'ajustement correspondant.

Or, en pratique, pour les dimensions relativement importantes, une troisième pièce est nécessaire.

Il s'agit d'un déflecteur, communément appelé visière, qui, formé nécessairement d'une pièce distincte de la boîte, est à rapporter en auvent le long de la paroi supérieure de celle-ci, pour y éviter l'entrée de corps étrangers lors de son ouverture.

(Voir mais dans une configuration différente, le document US-A-3 912 348).

La présente invention a d'une manière générale pour objet une disposition qui, tirant de manière très simple un parti supplémentaire d'un tel déflecteur, conduit avantageusement à une simplification de la fabrication de la boîte et conduit en outre à d'autres avantages.

De manière plus précise, elle a pour objet un coffret, notamment pour appareillages électriques, du genre comportant une boîte, qui, globalement parallélépipédique, en forme le corps, et qui, ouverte à l'avant, est fermée à l'arrière par un fond, une porte, qui, pour la fermeture, à l'avant, de ladite boîte, est articulée à celle-ci le long d'une de ses parois latérales, un cadre, qui, pour coopération en étanchéité avec ladite porte, s'étend autour de l'ouverture de la boîte, et un déflecteur, qui, formé d'une pièce distincte de la boîte, est rapporté en auvent le long de la paroi supérieure de celle-ci, ce coffret étant d'une manière générale caractérisé en ce que le côté du cadre correspondant à la paroi supérieure de la boîte est d'un seul tenant avec le déflecteur, l'ensemble appartenant à une seule et même pièce.

En pratique, suivant une forme préférée de réalisation, le côté du cadre correspondant à la paroi inférieure de la boîte est lui aussi d'un seul tenant avec une pièce identique à la précédente.

Bien entendu, placée à la partie inférieure de la boîte, cette pièce n'intervient pas en tant que déflecteur.

Mais, puisqu'elle est identique à ce déflecteur, sa mise en oeuvre n'entraîne avantageusement aucune pénalisation pour la réalisation de l'ensemble, sa propre réalisation relevant simplement de celle, déjà nécessaire, de celui-ci.

Corollairement, les deux autres côtés du cadre sont alors avantageusement d'un seul tenant avec la boîte.

N'ayant plus ainsi à assurer de contre-dépouilles que sur deux côtés, le moule correspondant se trouve avantageusement simplifié, au bénéfice de son coût et de sa cadence de moulage.

En outre, et surtout, il est alors possible, sans complication notable, de faire également venir d'un seul tenant de la boîte le fond de celle-ci.

Ainsi, s'agissant d'une boîte à équiper d'un déflecteur, il est avantageusement possible, suivant l'invention, de limiter à deux, au lieu de trois, le nombre de pièces distinctes à réaliser pour l'obtention de l'ensemble, à savoir, d'une part, une pièce comportant les parois latérales de cette boîte, son fond, et deux des côtés du cadre qui lui est associé, et, d'autre part, une pièce formant déflecteur, dont deux exemplaires sont à rapporter sur la précédente pour le complètement de ce cadre.

Le prix de revient de l'ensemble s'en trouve avantageusement minimisé.

Certes, le déflecteur se voyant attribuer, suivant l'invention, une fonction supplémentaire, qui est de participer à la constitution du cadre, il en résulte, pour ce déflecteur, un certain aménagement.

Mais, intervenant sur une pièce par elle-même simple, qu'il faut de toute façon réaliser de manière individuelle, cet aménagement, d'ailleurs minime, n'entraîne pas de complication majeure pour le moule correspondant, alors que, tel qu'exposé cidessus, il en résulte une simplification notable pour le moule à mettre en oeuvre pour la réalisation de la boîte.

La disposition suivant l'invention a par ailleurs en outre pour avantage de limiter à deux côtés du cadre, ceux correspondant aux deux pièces formant déflecteur à rapporter, et donc à deux côtés du périmètre d'ajustement correspondant au lieu de la totalité de celui-ci, les modalités à adopter pour assurer l'étanchéité de l'ensemble, au bénéfice, encore, de son prix de revient, et au bénéfice, également, de l'étanchéité recherchée.

Les caractéristiques et avantages de l'invention ressortiront d'ailleurs de la description qui va suivre, à titre d'exemple, en référence aux dessins schématiques annexés sur lesquels :

la figure 1 est une vue en perspective, porte ouverte, d'un coffret suivant l'invention, supposé équipé, intérieurement, d'un plastron ;

la figure 2 est, porte et plastron enlevés, une vue en perspective éclatée de la seule boîte de ce coffret, supposée alors dotée intérieurement d'un équipement propre à la fixation d'appareillages électriques, avec, pour certains de ces équipements, des arrachements locaux ;

la figure 3 est, à échelle supérieure, une vue en élévation, suivant la flèche III de la figure 2, d'une pièce formant déflecteur que comporte, suivant l'invention, cette boîte ;

la figure 4 est une vue en coupe transversale de cette pièce, suivant la ligne IV-IV de la figure 3 ;

la figure 5, qui reprend, à échelle supérieure, le détail de la figure 2 repéré par un encart 5 sur celle-ci, est une vue en perspective d'une des ferrures associées à une telle pièce ;

la figure 6 est, à l'échelle des figures 3 et 4, une vue partielle, en élévation, suivant la flèche VI de la figure 1, de la boîte du coffret suivant l'invention;

les figures 7 et 8 sont des vues partielles en coupe transversale de cette boîte, suivant respectivement les lignes VII-VII et VIII-VIII de la figure 2 ;

la figure 9 est une vue partielle en perspective reprenant, à échelle supérieure, le détail de la figure 1 repéré par un encart IX sur celle-ci.

Tel qu'illustré sur ces figures, le coffret suivant l'invention comporte, notamment, une boîte 10, qui, globalement parallélépipédique, en forme le corps, et qui, ouverte à l'avant, est fermée à l'arrière par un fond 11.

Outre ce fond 11, cette boîte 10 comporte, d'un seul tenant avec celui-ci, et suivant un contour rectangulaire pour l'ensemble, une paroi supérieure 12A, une paroi inférieure 12B, et deux parois latérales 12C.

Pour la fermeture, à l'avant, de la boîte 10 ainsi constituée, il est articulé à celle-ci, le long d'une quelconque de ses parois latérales 12C, en l'espèce, dans la forme de réalisation représentée, sa paroi latérale gauche, une porte 15.

La réalisation propre de cette porte 15 n'étant pas concernée par la présente invention, elle ne sera pas décrite ici.

Il en est de même, pour l'essentiel, en ce qui concerne ses moyens d'articulation.

Le coffret suivant l'invention comporte, également, associé à la boîte 10, un cadre 17, qui, pour coopération en étanchéité avec la porte 15, s'étend, suivant un contour rectangulaire, autour de l'ouverture de la boîte 10, ladite porte 15 comportant, dans une gorge 18, et suivant un même contour, un joint d'étanchéité 19, qui, pour sa position de fermeture, s'applique contre ce cadre 17.

En pratique, en correspondance, chacun respectivement, avec les quatre parois 12 de la boîte 10, le cadre 17 comporte quatre côtés 20, à savoir un côté supérieur 20A, un côté inférieur 20B, et deux côtés latéraux 20C.

Le coffret suivant l'invention comporte, enfin, un déflecteur 21A, qui, formé d'une pièce distincte de la boîte 10, est rapporté en auvent le long de la paroi supérieure 12A de celui-ci.

Suivant l'invention, le côté 20A du cadre 17 correspondant à cette paroi supérieure 12A de la boîte 10 est d'un seul tenant avec le déflecteur 21A, l'ensemble appartenant à une seule et même pièce 22A.

De préférence, et tel que représenté, le côté 20B du cadre 17 correspondant à la paroi inférieure 12B de la boîte 10 est lui aussi d'un seul tenant avec une pièce 22B identique à la précédente.

Les deux pièces 22A, 22B étant ainsi identiques l'une à l'autre, seule l'une d'elles, la pièce 22A, sera décrite en détail ici.

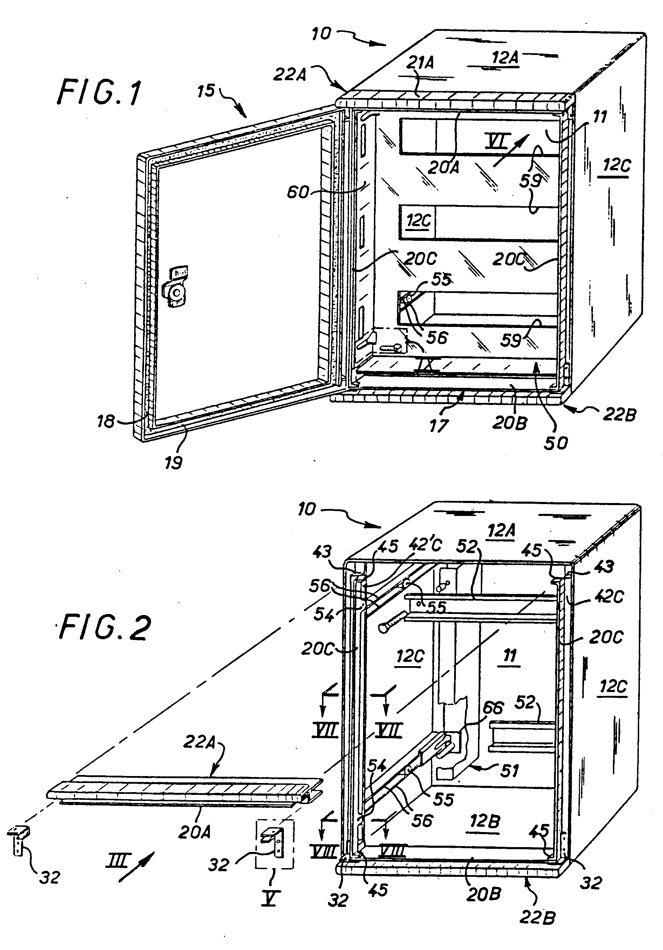

Tel qu'illustré sur les figures, et notamment les figures 2, 3, 4, elle comporte, d'un seul tenant, un corps 24, dont la longueur est sensiblement égale à la largeur de la boîte 10, tout en étant légèrement supérieure à celle-ci, et qui est muni d'une feuillure 25 propre à en permettre l'emboîtement sur la tranche de la paroi supérieure 12A, au moins, de cette boîte 10.

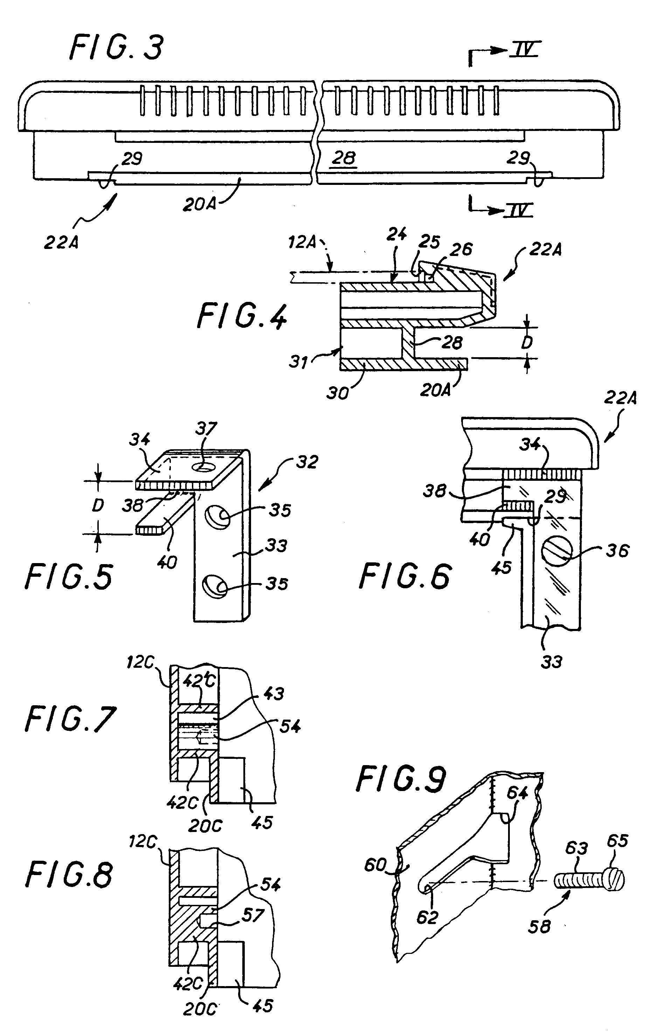

En pratique, cette feuillure 25 est ménagée sur la tranche d'une partie qui est en saillie sur la face supérieure du corps 24 de celui-ci, en étant disposée, transversalement, dans la zone médiane de cette face supérieure, et, orientée vers l'arrière, elle a un profil en arceau, en sorte que l'emboîtement de la pièce 22A intéresse, non seulement, tel que schématisé en traits interrompus sur la figure 4, la tranche de la paroi supérieure 12A de la boîte 10, mais encore la tranche des extrémités correspondantes des parois latérales 12C de celle-ci.

En pratique, également, cette feuillure 25 se prolonge, au-delà d'un épaulement, par une gorge de même profil 26 propre à la mise en place d'un joint d'étanchéité, non représenté, et, par exemple, d'un joint d'étanchéité en polystyrène expansé.

Dans la forme de réalisation représentée, le corps 24 de la pièce 22A est, pour son allègement, évidé.

La pièce 22A comporte, en outre, un flasque 28, qui s'étend sur une partie au moins de la longueur de son corps 24, et, en pratique, sur la portion de celle-ci correspondant à la largeur, mesurée intérieurement, de la boîte 10, et qui, comme la feuillure 25, mais sur la face inférieure du corps 24, s'étend dans la zone médiane de ce corps 24, et donc en retrait par rapport au bord avant de ce dernier.

En pratique, dans la forme de réalisation représentée, le flasque 28 s'étend sensiblement perpendiculairement à la face inférieure du corps 24.

La pièce 22A comporte enfin une lèvre 20A qui, destinée à former le côté correspondant du cadre 17, et donc volontairement désignée ici par la même référence que celui-ci, fait saillie sur le flasque 28, sensiblement parallèlement au corps 24 correspondant.

En pratique, cette lèvre 20A ne s'étend que sur une portion de la longueur du flasque 28, celle correspondant à la longueur du côté concerné du cadre 17.

En outre, et pour des raisons qui apparaîtront ci-après, elle présente, sur sa face inférieure, à chacune de ses extrémités, un décrochement 29.

Dans la forme de réalisation représentée, cette lèvre 20A de la pièce 22A est dans le prolongement de la paroi 30 correspondante d'un volume en caisson 31 adossé, pour le raidissement de l'ensemble, au corps 24 de cette pièce 22A et à son flasque 28, à l'arrière de ce dernier.

A chacune des extrémités de la pièce 22A ainsi constituée, qui est, en pratique, une pièce en matière synthétique réalisée par moulage, il est associé une ferrure métallique en équerre 32 comportant une platine 33, par laquelle elle est adaptée à être rapportée sur la boîte 10, avec insertion, entre elle et celle-ci, de l'extrémité concernée d'une telle pièce 22A, et une aile 34, qui est adaptée à permettre l'articulation de la porte 15.

Bien entendu, seule l'une des ferrures 32 ainsi associées à une telle pièce 22A sert effectivement à l'articulation de la porte 15, celle disposée à l'extrémité correspondante de cette pièce 22A, en association avec la ferrure 32 associée de manière semblable à l'extrémité correspondante de la pièce 22B.

Mais, pour la simplification des fabrications, et pour permettre de disposer indifféremment la porte 15 le long de l'une ou l'autre des parois latérales 12C de la boîte 10 et ainsi en permettre indifféremment l'ouverture à droite ou à gauche, les deux ferrures 32 associées à la pièce 22A sont identiques entre elles, et celles associées à la pièce 22B leur sont elles-mêmes identiques.

Dans la forme de réalisation représentée, la platine 33 d'une telle ferrure 32 présente, à distance l'un de l'autre, deux perçages 35 propres chacun au passage d'un quelconque moyen de fixation, par exemple une vis 36, tel que représenté à la figure 6.

Corollairement, l'aile 34 d'une ferrure 32 présente un perçage 37 par lequel elle est adaptée à permettre l'articulation de la porte 15, par exemple par coopération avec un gond solidaire de celle-ci.

Dans la forme de réalisation représentée, et pour des raisons qui apparaîtront ultérieurement, l'aile 34 d'une ferrure 32 déborde latéralement de la platine 33 de celle-ci, d'un côté de cette platine, en étant accompagnée par un prolongement latéral de même extension 38 de cette platine 33, et, le long de l'autre côté de ce prolongement latéral 38, cette ferrure 32 comporte une deuxième aile 40.

Les ailes 34 et 40 s'étendent d'un même côté de la platine 33, perpendiculairement à celle-ci, et elles ont l'une et l'autre une même extension.

La distance D séparant l'une de l'autre leurs faces extérieures opposées est sensiblement égale à celle séparant du corps 24 de la pièce 22A la face de la lèvre 20A de celle-ci tournée vers ce corps 24.

Comme indiqué ci-dessus, la pièce 22B prévue à la partie inférieure de la boîte 10 a une constitution analogue à celle de la pièce 22A, et, comme à celle-ci, il est associé, à chacune de ses extrémités, une ferrure 32.

Corollairement, les deux autres côtés du cadre 17, c'est-à-dire les côtés 20C de celui-ci correspondant aux parois latérales 12C de la boîte 10, sont d'un seul tenant avec cette boîte 10.

En pratique, chacun de ces côtés 20C forme une lèvre, qui, portée par une languette 42C perpendiculaire à la paroi latérale 12C correspondante de la boîte 10, s'étend vers l'avant, perpendiculairement à une telle languette 42C.

La languette 42C portant ainsi un côté 20C du cadre 17 est disposée légèrement en retrait par rapport à la tranche de la paroi latérale 12C concernée de la boîte 10, et, comme un tel côté 20C, elle ne s'étend que sur une portion de la hauteur de celle-ci, en se raccordant, à ses extrémités, par des retours en équerre 43, à une autre languette 42′C, qui, parallèle à elle, mais encore plus en retrait qu'elle par rapport à la tranche de ladite paroi latérale 12C, s'étend, elle, sur toute la hauteur de cette dernière et forme raidisseur.

Les deux languettes 42C, 42′C, qui, l'une et l'autre, font saillie sur la face interne d'une telle paroi latérale 12C de la boîte 10, ont, l'une et l'autre, une même extension.

Les côtés 20C du cadre 17 ainsi portés en porte-à-faux par les languettes 42C de la boîte 10, d'un seul tenant avec l'ensemble de celle-ci, présentent eux-mêmes, en porte-à-faux, à leurs extrémités, et en direction l'un vers l'autre, des retours en équerre 45.

Au montage, les pièces 22A, 22B suivant l'invention, préalablement équipées d'un joint d'étanchéité dans leur gorge 26, sont emboîtées à force, par leur feuillure 25, sur la tranche des parois supérieure et inférieure 12A, 12B de la boîte 10.

Au terme de cet emboîtement, qui, comme déjà indiqué ci-dessus, intéresse également les extrémités des parois latérales 12C de la boîte 10, les lèvres de ces pièces 22A, 22B destinées à former les côtés 20A, 20B du cadre 17 viennent se superposer, par leurs extrémités, aux retours en équerre 45 des côtés 20C de ce cadre 17 appartenant, eux, à la boîte 10, en épousant, par leur décrochement 29, ces retours en équerre 45.

Ainsi se trouve reconstituée la continuité du cadre 17.

Une ferrure 32 est ensuite mise en place à chacune des extrémités des pièces 22A, 22B.

Par sa platine 33, une telle ferrure 32 s'applique à la languette 42C correspondante de la boîte 10, et, par des vis 36, elle est convenablement assujettie à celle-ci.

Conjointement, tant par le prolongement latéral 38 de sa platine 33 que par l'extrémité correspondante de celle-ci, une telle ferrure 32 s'applique également contre le flasque 28 de la pièce 22A, 22B concernée, ce qui confirme l'assujettissement de cette pièce 22A, 22B à la boîte 10, une telle pièce 22A, 22B se trouvant en quelque sorte pincée entre, d'une part, une telle ferrure 32, fixée à la boîte 10, et, d'autre part, cette même boîte 10.

Par ailleurs, compte tenu de la distance D précédemment mentionnée, chaque ferrure 32 vient s'insérer, par ses ailes 34 et 40, entre le corps 24 de la pièce 22A, 22B concernée et la lèvre de celle-ci formant le côté 20A, 20B correspondant du cadre 17.

Ainsi, l'aile 40 d'une telle ferrure 32 vient avantageusement, à l'extrémité d'une telle lèvre, se superposer, localement, à cette extrémité, pour l'appuyer sur le retour en équerre 45 sous-jacent du côté 20C correspondant du cadre 17, au bénéfice de la continuité de celui-ci.

Autrement dit, par leur retour en équerre 45, les côtés 20C du cadre 17, qui, d'un seul tenant avec la boîte 10, sont adjacents aux côtés 20A, 20B de ce cadre 17 appartenant, eux, aux pièces 20A, 20B suivant l'invention, fournissent un appui à ces côtés 20A, 20B.

Par ailleurs, dans le coffret suivant l'invention, il est de préférence prévu, tel que représenté, à demeure à la surface interne de deux parois opposées de la boîte 10, en correspondance de l'une à l'autre de celles-ci, des points de fixation propres à permettre de rapporter dans cette boîte 10 au moins un quelconque accessoire, tel que plastron 50 ou montants 51 propres eux-mêmes à la fixation de rails 52.

En pratique, et tel que représenté, les parois de la boîte 10 présentant ainsi par avance de tels points de fixation en sont les parois latérales 12C, celles avec lesquelles sont d'un seul tenant les côtés 20C correspondants du cadre 17.

Pour le plastron 50, deux points de fixation 54 sont prévus sur chacune de ces parois latérales 12C.

Il s'agit de bossages, qui, adossés à la languette 42C d'une telle paroi latérale 12C, en faisant saillie sur celle-ci, sont établis chacun respectivement au voisinage des extrémités de cette languette 42C, dans le volume laissé libre entre elle et la languette 42′C associée.

Pour chacun des deux montants 51, deux points de fixation 55 sont également prévus sur chacune des parois latérales 12C de la boîte 10.

Il s'agit de bossages disposés chacun entre deux languettes 56 reliant transversalement, parallèlement l'une à l'autre, et en saillie sur la paroi latérale 12C concernée de la boîte 10, la languette 42′C de cette paroi latérale 12C au fond 11 de cette boîte 10.

Tel que représenté, chacun des points de fixation 54, 55 ainsi constitués peut comporter un alésage borgne 57 directement propre au vissage d'une vis 58.

Mais, si désiré, pour un tel vissage, un écrou métallique peut être noyé dans un tel perçage 57.

De manière connue en soi, le plastron 50 comporte, en hauteur, des évidements 59 propres au passage de la partie de façade des appareillages électriques concernés.

Dans le coffret suivant l'invention, il comporte, en outre, latéralement, pour sa fixation, des retours en équerre 60, et, dans chacun de ceux-ci, il est ménagé, en correspondance avec les points de fixation 54 correspondants, des boutonnières 62, qui s'étendent transversalement, et qui sont chacune propres au passage du fût 63 de la vis 58 correspondante.

Grâce à de telles boutonnières 62, le plastron 50 peut avantageusement être ajusté en position par rapport aux vis 58 qui en assurent la fixation.

De préférence, et tel que représenté, ces boutonnières 62 se prolongent chacune sur la partie de façade du plastron 50, en y formant alors un épanouissement 64 propre au passage de la tête 65 d'une vis 58.

La dépose éventuelle du plastron 50, pour accès aux appareillages électriques concernés en vue de la maintenance de ceux-ci ou pour une quelconque autre intervention au sein de la boîte 10, peut dès lors se faire aisément, sans dépose des vis de fixation 58 correspondantes, et il en est de même pour sa remise en place.

Une fixation de même type est avantageusement adoptée pour les montants 51, qui sont en pratique au nombre de deux.

Cette fixation se fait en effet par l'intermédiaire d'équerres 66, qui présentent une boutonnière de même type que la précédente, et qui, par une aile dotée à cet effet de retours en équerre, coiffent les languettes 56 correspondantes de la paroi latérale 12C concernée de la boîte 10, tandis que leur autre aile porte en saillie un goujon propre à la fixation d'un tel montant 51.

De manière usuelle, les rails 52 à mettre en oeuvre pour le support des appareillages électriques concernés sont ensuite rapportés, par des vis, sur les montants 51.

**Revendications**

1. Coffret, notamment pour appareillages électriques, du genre comportant une boîte (10), qui, globalement parallélépipédique, en forme le corps, et qui, ouverte à l'avant, est fermée à l'arrière par un fond (11), une porte (15), qui, pour la fermeture, à l'avant, de ladite boîte (10), est articulée à celle-ci le long d'une de ses parois latérales (12C), un cadre (17), qui, pour coopération en étanchéité avec ladite porte (15), s'étend autour de l'ouverture de la boîte (10), et un déflecteur (21A), qui, formé d'une pièce distincte de la boîte (10), est rapporté en auvent, le long de la paroi supérieure (12A) de celle-ci, caractérisé en ce que le côté (20A) du cadre (17) correspondant à la paroi supérieure de la boîte (10) est d'un seul tenant avec le déflecteur (21A), l'ensemble appartenant à une seule et même pièce (22A).

2. Coffret suivant la revendication 1, caractérisé en ce que ladite pièce (22A) comporte d'un seul tenant un corps (24), qui est muni d'une feuillure (25) pour son emboîtement sur la tranche de la paroi supérieure (12A), au moins, de la boîte (10), un flasque (28), qui s'étend sur une partie au moins de la longueur dudit corps (24), en retrait par rapport au bord avant de celui-ci, et une lèvre (20A) qui, destinée à former le côté correspondant (20A) du cadre (17), fait saillie sur ledit flasque (28), sensiblement parallèlement audit corps (24).

3. Coffret suivant la revendication 2, caractérisé en ce que ladite lèvre (20A) est dans le prolongement de la paroi correspondante (30) d'un volume en caisson (31) adossé audit corps (24) et audit flasque (28) à l'arrière de ce dernier.

4. Coffret suivant l'une quelconque des revendications 1 à 3, caractérisé en ce que, à chacune des extrémités de ladite pièce (22A), il est associé une ferrure (32) en équerre comportant une platine (33), par laquelle elle est rapportée sur la boîte (10), avec insertion, entre elle et celle-ci, de l'extrémité concernée de ladite pièce (22A), et une aile (34), qui est adaptée à permettre l'articulation de la porte (15).

5. Coffret suivant la revendication 4, caractérisé en ce que ladite ferrure (32) comporte une deuxième aile (40) superposée, localement, à l'extrémité correspondante du côté (20A) concerné du cadre (17).

6. Coffret suivant l'une quelconque des revendications 1 à 5, caractérisé en ce que les côtés (20C) du cadre (17) adjacents à celui (20A) appartenant à ladite pièce (22A) présentent chacun, à leur extrémité concernée par ledit côté (20C), pour appui de celui-ci, un retour en équerre (45).

7. Coffret suivant l'une quelconque des revendications 1 à 6, caractérisé en ce que le côté (20B) du cadre (17) correspondant à la paroi inférieure (12B) de la boîte (10) est lui aussi d'un seul tenant avec une pièce (22B) identique à la précédente.

8. Coffret suivant la revendication 7, caractérisé en ce que les deux autres côtés (20B) du cadre (17) sont d'un seul tenant avec la boîte (10).

9. Coffret suivant l'une quelconque des revendications 1 à 8, caractérisé en ce qu'il est prévu, à demeure, à la surface interne de deux parois opposées de la boîte (10), en correspondance de l'une à l'autre de celles-ci, des points de fixation (54, 55) propres à permettre de rapporter dans cette boîte au moins un quelconque accessoire, tel que plastron (50) et montants (51) propres à la fixation de rails (52).

10. Coffret suivant la revendication 9, caractérisé en ce que les parois de la boîte (10) présentant lesdits points de fixation (54, 55) en sont les parois latérales (12C).

## Claims

1. A box, in particular for items of electrical equipment, of the type comprising a casing (10) which, being generally parallelepipedic, forms the body thereof and which, being open at the front, is closed at the rear by a back (11), a door (15) which, for closing said casing (10) at the front, is pivotally mounted thereto along one of its side walls (12C), a frame (17) which, for sealingly co-operating with said door (15), extends around the opening of the casing (10), and a deflector (21A) which, formed by a separate portion from the casing (10), is fitted thereto as a hood means, along the upper wall (12A) thereof, characterised in that the side (20A) of the frame (17) corresponding to the upper wall of the casing (10) is in one piece with the deflector (21A), the assembly belonging to one and the same portion (22A).

2. A box according to claim 1 characterised in that said portion (22A) comprises in one piece a body (24) which is provided with a groove (25) for the engagement thereof on to the edge portion of the upper wall (12A) at least of the casing (10), a web portion (28) which extends over a part at least of the length of said body (24), being set back with respect to the front edge thereof, and a lip (20A) which, intended to form the corresponding side (20A) of the frame (17), projects beyond said web portion (28) substantially parallel to said body (24).

3. A box according to claim 2 characterised in that said lip (20A) is in line with the corresponding wall (30) of a box volume (31) which backs against said body (24) and said web portion (28) rearwardly of the latter.

4. A box according to any one of claims 1 to 3 characterised in that associated with each of the ends of said portion (22A) is a right-angled fitment (32) comprising a plate portion (33) by means of which it is fitted to the casing (10) with the insertion between it and the latter of the associated end of said portion (22A), and a limb (34) adapted to permit pivotal mounting of the door (15).

5. A box according to claim 4 characterised in that said fitting (32) comprises a second limb (40) which is in locally superposed relationship with the corresponding end of the associated side (20A) of the frame (17).

6. A box according to any one of claims 1 to 5 characterised in that the sides (20C) of the frame (17) which are adjacent to that (20A) which belongs to said portion (22A) each have a right-angled return portion (45) at their end associated with said side (20C) for supporting same.

7. A box according to any one of claims 1 to 6 characterised in that the side (20B) of the frame (17) which corresponds to the lower wall (12B) of the casing (10) is also in one piece with a portion (22B) identical to the above-mentioned portion.

8. A box according to claim 7 characterised in that the other two sides (20B) of the frame (17) are in one piece with the casing (10).

9. A box according to any one of claims 1 to 8 characterised in that fixedly provided at the internal surface of two opposite walls of the casing (10) in mutual correspondence with each other thereon are fixing points (54, 55) for permitting at least one accessory of some kind such as a plate (50) and uprights (51) for fixing rails (52), to be fitted into said casing.

10. A box according to claim 9 characterised in that the walls of the casing (10) having said fixing points (54, 55) are the side walls (12C) thereof.

## Patentansprüche

1. Schrank, insbesondere für elektrische Geräte, mit einem dessen Körper bildenden Gehäuse (10), das insgesamt die Form eines Parallelflachs aufweist, vorne offen und hinten durch eine Rückwand (11) geschlossen ist, einer Tür (15), die zum vorderen Schließen des Gehäuses (10) mit diesem entlang einer seiner Seitenwände (12C) gelenkig verbunden ist, einem Rahmen (17), der sich für ein dichtendes Zusammenwirken mit der Tür um die Öffnung des Gehäuses (10) erstreckt, und mit einem Abweiser (21A), der aus einem vom Gehäuse (10) verschiedenen Stück gebildet und in Form eines Vordaches entlang dessen oberer Wand (12A) angebracht ist,
dadurch **gekennzeichnet,**
daß die Seite (20A) des Rahmens (17), die der oberen Wand des Gehäuses (10) entspricht, mit dem Abweiser (21A) aus einem Stück gebildet ist, wobei das Ganze zu ein und demselben Teil (22A) gehört.

2. Schrank nach Anspruch 1,
dadurch **gekennzeichnet,**
daß das Teil (22A) einen Körper (24) aus einem Stück umfaßt, der mit einem Anschlag oder Falz (25) zum Aufstecken auf den Rand zumindest der oberen Wand (12A) des Gehäuses (10) versehen ist, einen Flansch (28) aufweist, der sich über einen Teil zumindest der Länge des Körpers (24) erstreckt und bezüglich des vorderen Randes desselben zurückversetzt ist, sowie mit einer Lippe (20A) versehen ist, die zur Bildung der entsprechenden Seite (20A) des Rahmens (17) bestimmt ist und am Flansch (28) im wesentlichen parallel zum Körper (24) vorspringt.

3. Schrank nach Anspruch 2,
dadurch **gekennzeichnet,**
daß die Lippe (20A) in Verlängerung der entsprechenden Wand (30) eines senkkastenartigen Raumes (31) vorgesehen ist, der an dem Körper (24) sowie dem Flansch (28) hinter dem letzteren angeordnet ist.

4. Schrank nach einem der Ansprüche 1 bis 3,
dadurch **gekennzeichnet,**
daß jedem der Enden des Teils (22A) ein rechtwinkliger Beschlag (32) zugeordnet ist, der eine Platte (33) aufweist, über die es unter Zwischenschaltung des betreffenden Endes des Teils (22A) zwischen diesem und dem Gehäuse (10) am Gehäuse (10) angebracht ist, sowie einen Flügel (34) aufweist, der ein Verschwenken der Tür (15) zuläßt.

5. Schrank nach Anspruch 4,
dadurch **gekennzeichnet,**
daß der Beschlag (32) einen zweiten Flügel (40) umfaßt, der örtlich über dem entsprechenden Ende der betreffenden Seite (20A) des Rahmens (17) liegt.

6. Schrank nach einem der Ansprüche 1 bis 5,
dadurch **gekennzeichnet,**
daß die Seiten (20C) des Rahmens (17), die an diejenige (20A) angrenzen, welche dem Teil (22A) zugeordnet sind, an ihrem betreffenden Ende an der Seite (20C) für deren Abstützung jeweils einen rechtwinkligen Rücksprung (45) aufweisen.

7. Schrank nach einem der Ansprüche 1 bis 6,
dadurch **gekennzeichnet,**

daß die Seite (20B) des Rahmens (17), die der unteren Wand (12B) des Gehäuses (10) entspricht, selbst auch aus einem Stück mit einem Teil (22B) gleich dem vorhergehenden besteht.

8. Schrank nach Anspruch 7,
dadurch **gekennzeichnet,**
daß die beiden anderen Seiten (20B) des Rahmens (17) aus einem Stück mit dem Gehäuse (10) bestehen.

9. Schrank nach einem der Ansprüche 1 bis 8,
dadurch **gekennzeichnet,**
daß an der Innenfläche der beiden einander gegenüberliegenden Wände des Gehäuses (10) in einander entsprechender Weise bleibende Befestigungsstellen (54, 55) vorgesehen sind, die es erlauben, in dem Gehäuse zumindest irgendein Zubehör, wie eine Platte (50) und Stützen (51) zur Festlegung von Schienen (52) anzubringen.

10. Schrank nach Anspruch 9,
dadurch **gekennzeichnet,**
daß die die Befestigungsstellen (54, 55) aufweisenden Wände des Gehäuses (10) die Seitenwände (12C) sind.

FIG.1

FIG.2

FIG. 3

FIG.4

FIG.5

FIG.6

FIG.7

FIG.8

FIG.9